# EUROPEAN PATENT APPLICATION

(11) **EP 4 708 420 A1**
(43) Date of publication of application: **11.03.2026**
(21) Application number: 25191824.9
(22) Date of filing: 25.07.2025
(51) Int. Cl.: H01M 10/04, H01M 10/0587, H01M 50/107, H01M 50/477, H01M 50/486, H01M 50/531, H01M 50/538, H01M 50/593, H01M 50/595

(54) **SECONDARY BATTERY, BATTERY ASSEMBLY, AND ELECTRONIC DEVICE**

(30) Priority: 22.08.2024 CN 202422052264 U
(71) Applicant: AESC Japan Ltd., Yokohama-Shi, Kanagawa 220-0012 (JP)
(72) Inventor: JI, Peng, Jiangyin City, Wuxi City, 214443 (CN)
(74) Representative: Becker, Eberhard

(57) **Abstract**

A secondary battery (300) including a housing (320) having an end wall and a sidewall, a positive electrode sheet, a first separator (210), a negative electrode sheet (220), a second separator (210), a first collector plate (310), and a first insulation film (230) is provided. An opening (330) is formed on one side of the sidewall facing away from the end wall. The positive electrode sheet, the first separator (210), the negative electrode sheet (220), and the second separator (210) are stacked and wound sequentially to form an electrode assembly (200) accommodated in the housing (320). The first collector plate (310) is disposed on one end of the electrode assembly (200) facing the opening (330), and the housing (320) is electrically connected to the negative electrode tab (221) through the first collector plate (310). The first insulation film (230) is wrapped around an outer periphery of the electrode assembly (200).

## Description

### BACKGROUND

### Field of the Disclosure

The present disclosure relates to a secondary battery, a battery assembly and an electronic device.

### Description of Related Art

In the industry of new energy power batteries, secondary batteries are applied in more and more categories. For example, secondary batteries (e.g., lithium-ion batteries) may be applied to vehicles, energy storage, mobile phones, tablets, wearable devices, power banks, electronic cigarettes, digital products, electric tools, power devices, energy storage devices and other electronic devices. The secondary battery includes a housing and an electrode assembly. An electrode assembly includes a positive electrode sheet, a first separator, a negative electrode sheet and a second separator, which are stacked and wound in sequence to form the electrode assembly, and then accommodated in a housing. However, further improvement still need to be made to current secondary batteries in some aspects.

### SUMMARY OF THE DISCLOSURE

In view of the problems existing in the related technology, a purpose of the present disclosure is to provide a secondary battery, a battery assembly and an electronic device, which at least avoid the problem of poor connection caused by a first insulation film being inserted at a joining position between a first collector plate and a sidewall of a housing.

To achieve the above purpose, an embodiment of the present disclosure provides a secondary battery, including: a housing, having an end wall and a sidewall surrounding the end wall, with an opening formed on one side of the sidewall facing away from the end wall, where a direction extending from the end wall toward the opening is a preset direction; a positive electrode sheet, a first separator, a negative electrode sheet and a second separator, which are stacked and wound in sequence to form an electrode assembly, the electrode assembly being accommodated in the housing, the negative electrode sheet including a negative electrode active substance layer region and a negative electrode tab arranged along the preset direction; a first collector plate, disposed on one end of the electrode assembly facing the opening, the housing being electrically connected to the negative electrode tab through the first collector plate, and a first insulation film, wrapped around and adhered to an outer periphery of the electrode assembly, wherein, in the preset direction, an edge of the first insulation film facing the opening does not extend beyond the negative electrode active substance layer region.

In the above embodiment, in the first direction extending from the end wall toward the opening, the edge of the first insulation film facing the opening does not extend beyond the negative electrode active substance layer region, which may at least prevent the first insulation film from being inserted into a joining position between the first collector plate and the sidewall of the housing, and at least reduce the occurrence of poor connections.

In some embodiments, the positive electrode sheet includes a positive electrode active substance layer region and a positive electrode tab disposed in a direction opposite to the preset direction. The positive electrode tab is disposed on one side facing the end wall, wherein, in the preset direction, the edge of the first insulation film exceeds the positive electrode active substance layer region.

In some embodiments, the first insulation film may be wrapped around and attached to the outer periphery of the electrode assembly for at least one turn.

In some embodiments, the first insulation film overlaps in a winding direction of the electrode assembly to form a first overlap region, and a length of the first overlap region in the winding direction is greater than 0 and less than or equal to 3 millimeters.

In some embodiments, the secondary battery further includes: a second collector plate, disposed between the end wall and the positive electrode tab, as well as a second insulation film, surrounding an outer peripheral surface of the second collector plate, wherein a minimum radius of the second insulation film is R mm larger than a radius of the second collector plate, and the R is greater than or equal to 6.

In some embodiments, in a height direction of the secondary battery, the second insulation film overlaps with the first insulation film, and a height of an overlap region is greater than or equal to 3mm, and less than or equal to 20mm.

In some embodiments, the second insulation film overlaps in the winding direction to form a second overlap region, wherein the first overlap region and the second overlap region do not overlap in the winding direction.

In some embodiments, the second insulation film overlaps in the winding direction to form a second overlap region, wherein the first overlap region, the second overlap region, a finishing position of the positive electrode sheet, and a finishing position of the negative electrode sheet do not overlap with each other in the winding direction.

In some embodiments, the secondary battery is a columnar battery.

In some embodiments, the first collector plate is welded with the sidewall.

An embodiment of the present disclosure further provides a battery assembly, including the secondary battery described in any one of the above embodiments.

An embodiment of the present disclosure further provides an electronic device, including the secondary battery described in any one of the above embodiments.

The advantageous technical effects of the present disclosure lie in the following.

In the first direction extending from the end wall toward the opening of the present disclosure, the edge of the first insulation film facing the opening does not extend beyond the negative electrode active substance layer region, which may at least prevent the first insulation film from being inserted into a joining position between the first collector plate and the sidewall of the housing, and at least reduce the occurrence of poor connections.

### BRIEF DESCRIPTION OF THE DRAWINGS

In order to explain the technical solutions in the embodiments of the present disclosure or in the related art more clearly, a brief introduction will be made to the drawings required in the embodiments. Evidently, the drawings described below are only some embodiments of the present disclosure. For those skilled in the art, other drawings may be obtained based on these drawings without creative effort.
FIG.1 is a schematic view of an electronic device as a vehicle according to an embodiment of the present disclosure.
FIG. 2 is a front view of an electrode assembly of a secondary battery according to an embodiment of the present disclosure.
FIG. 3 is a partial cross-sectional view of a secondary battery according to an embodiment of the present disclosure.
FIG. 4 is an enlarged schematic view of a region B in FIG. 3.
FIG. 5 is a schematic view of a negative electrode active substance layer region of a negative electrode sheet, a positive electrode active substance layer region of a positive electrode sheet, and a first insulation film in a region A of FIG. 2.
FIG. 6 is a partial schematic view of a secondary battery according to an embodiment of the present disclosure.
FIG. 7 is a schematic view of an electrode assembly according to an embodiment of the present disclosure.

### DESCRIPTION OF EMBODIMENTS

For a better understanding of the spirit of embodiments of the present disclosure, the following further explains the embodiments of the present disclosure in conjunction with some preferred embodiments of the present disclosure.

The embodiments of the present disclosure will be described in detail below. Throughout the specification of the present disclosure, the same or similar components and components with the same or similar functions are represented by similar reference numerals. The embodiments related to the drawings described herein are illustrative, graphical in nature, and provided for a basic understanding of the present disclosure. The embodiments of the present disclosure should not be interpreted as limitations to the present disclosure.

As used in this specification, the terms "generally," "substantially," "essentially," and "approximately" are used to describe and explain minor variations. When used in conjunction with events or circumstances, these terms refer to instances where the described events or circumstances occur precisely as well as instances where they occur in a very close approximation thereto.

In this specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom" and their derivative terms (such as "horizontally", "downwardly", "upwardly", etc.) should be interpreted as referring to the orientation described in the discussion or shown in the drawings. These relative terms are only used for convenience of description and do not require that the present disclosure be constructed or operated in a specific direction.

For ease of description, "first", "second", "third", and so on may be used in this specification to distinguish different components of a figure or a series of figures. "First", "second", "third", and so on are not intended to describe the corresponding components.

In addition, in the case of no conflict, the embodiments and features in the embodiments of the present disclosure may be combined with each other. The following will explain the present disclosure in detail with reference to the accompanying drawings and in conjunction with the embodiments.

The present disclosure provides an electronic device 1000. The electronic device 1000 includes a battery assembly 1002. An operation part of the electronic device 1000 is electrically connected to the battery assembly 1002 to obtain power support. As an example, the electronic device 1000 is a vehicle, the vehicle may be a gasoline vehicle, a gas vehicle or a new energy vehicle, and the new energy vehicle may be a pure electric vehicle, a hybrid vehicle or a range-extended vehicle, and so on, but is not limited thereto. The operation part is a car body, the battery assembly 1002 is disposed at the bottom of the car body, and provides power support for driving the vehicle or the operation of electrical components in the vehicle. However, in some other embodiments, the electronic device 1000 may also be a mobile phone, a portable device, a laptop, a ship, a spacecraft, an electric toy and an electric tool, etc. The spacecraft includes an aircraft, a rocket, a space shuttle and a spaceship, and so on. The operation part may obtain power from the battery assembly 1002, and perform corresponding operation as a unit component, such as a fan blade rotation unit of a fan, a dust suction operation unit of a vacuum cleaner, etc. Electric toys include fixed or mobile electric toys, for example, game consoles, electric car toys, electric ship toys and electric aircraft toys, and so on. The electric tools include metal cutting electric tools, grinding electric tools, assembly electric tools and railway electric tools, for example, electric drills, electric grinders, electric wrenches, electric screwdrivers, electric hammers, impact drills, concrete vibrators and electric planers, etc. The embodiments of the present disclosure do not impose special restrictions on the above electronic device 1000.

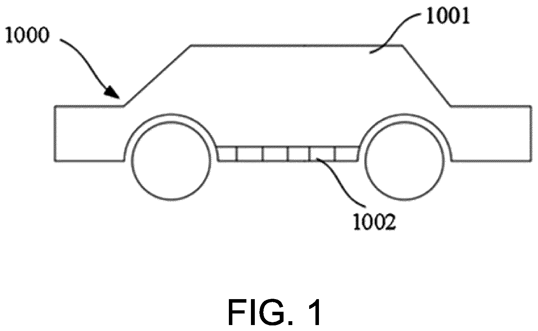

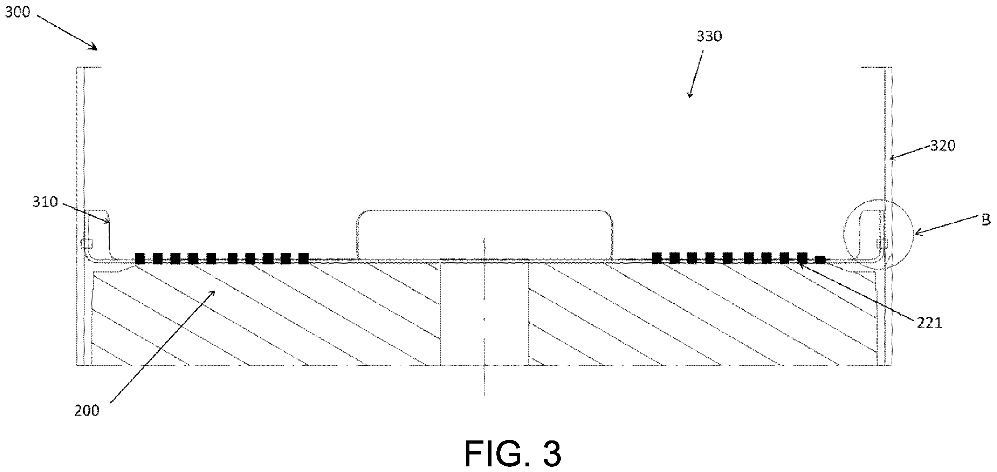

In the following embodiment, for ease of explanation, the electronic device 1000 is described using a vehicle as an example. Referring to FIG. 1, the battery assembly 1002 is disposed inside the vehicle, and the battery assembly 1002 may be disposed at the bottom, front, or rear of the car body 1001. The battery assembly 1002 may be used to supply power to the vehicle, for example, the battery assembly 1002 may serve as the operating power source for the vehicle. The battery assembly 1002 may include multiple secondary batteries (such as a secondary battery 300 in FIG. 3) and a housing that contains the multiple secondary batteries.

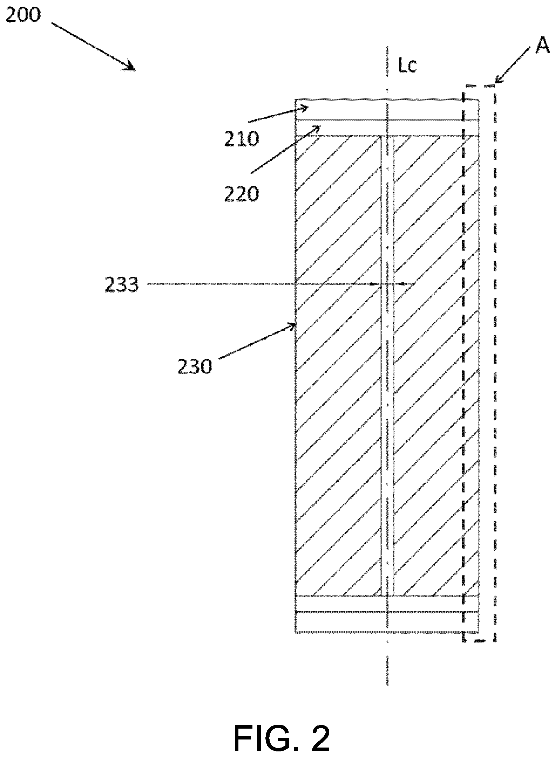

FIG. 2 is a front view of an electrode assembly 200 of a secondary battery according to an embodiment of the present disclosure. As shown in FIG. 2, the electrode assembly 200 is formed by sequentially stacking and winding a positive electrode sheet (not shown), a separator 210, and a negative electrode sheet 220 around a winding center line Lc. At a periphery of the electrode assembly 200, a first insulation film 230 is wrapped around and adhered to an outer periphery of the electrode assembly 200, and the first insulation film 230 overlaps in a winding direction, that is, the number of turns that the first insulation film 230 is wrapped around the electrode assembly 200 is greater than one turn, and there is a first overlap region 233 that is thicker compared to other regions of the first insulation film 230. The separator 210 includes a first separator 210 and a second separator 210. Preferably, a length of the first overlap region 233 in the winding direction is greater than 0 and less than or equal to 3 millimeters. The first overlap region 233 ensures the safety performance of the electrode assembly 200. For example, the first overlap region 233 with a greater thickness may prevent foreign objects from piercing the electrode assembly 200 and prevent corrosive materials from entering the electrode assembly 200. To ensure the roundness of the first insulation film 230, the number of turns that the first insulation film 230 is wrapped around and adhered to the outer periphery of the electrode assembly 200 cannot be less than one turn. If the number of turns is less than one turn, the electrode assembly is likely to contact an inner wall of the housing, leading to corrosion of the inner wall of the housing. Moreover, configuring the first insulation film 230 to surround the electrode assembly 200 may avoid contact between the electrode assembly 200 and other components (such as a housing 320 in FIG. 3), thus providing better protection and insulation for the electrode assembly 200. The first insulation film 230 surrounds and tightens the positive electrode sheet and the negative electrode sheet. The first insulation film 230 may be used to fix a finishing end of the electrode assembly 200 to maintain the tightness of the winding of the electrode assembly 200. In some embodiments, the first insulation film 230 may be synthesized from PP, PE, PET (polyethylene terephthalate), PVC (Polyvinyl chloride) and so on, or other polymer materials. In some embodiments, the first insulation film 230 is generally a PET tape, a non-woven fabric tape, a PAA tape, etc.

The positive electrode sheet may include a positive electrode current collector and a positive electrode active substance layer coated on surfaces at both sides of the positive electrode current collector. A portion of the positive electrode current collector not coated with the positive electrode active substance layer constitutes a positive electrode tab. The positive electrode sheet includes a positive electrode active substance layer region and a positive electrode tab arranged along an opposite direction (i.e., a direction from top to bottom in FIG. 2) of the preset direction. The negative electrode sheet 220 may include a negative electrode current collector and a negative electrode active substance layer coated on surfaces at both sides of the negative electrode current collector. A portion of the negative electrode current collector not coated with the negative electrode active substance layer constitutes a negative electrode tab. The negative electrode sheet includes a negative electrode active substance layer region and a negative electrode tab arranged along the preset direction (i.e., a direction from bottom to top in FIG. 2). Taking a lithium-ion battery as an example, a material of the positive electrode current collector may be aluminum, the positive electrode active substance layer may include a positive electrode active substance, and the positive electrode active substance may be lithium cobalt oxide, lithium iron phosphate, ternary lithium, or lithium manganese oxide, etc. A material of the negative electrode current collector may be copper, the negative electrode active substance layer may include a negative electrode active substance, and the negative electrode active substance may be carbon or silicon, etc. In FIG. 2, the separator 210 may be a first separator or a second separator, and the negative electrode sheet 220 shown is the negative electrode active substance layer region. In a height direction of the electrode assembly 200 surrounded by the first insulation film 230, the separator 210 protrudes more compared to the negative electrode active substance layer region of the negative electrode sheet 220. Furthermore, the negative electrode active substance layer region of the negative electrode sheet 220 protrudes more compared to the positive electrode active substance layer region of the positive electrode sheet. The reason is that, for example, for lithium-ion batteries, lithium ions move from the positive electrode active substance layer region of the positive electrode sheet to the negative electrode active substance layer region of the negative electrode sheet. In order for the negative electrode sheet to fully receive lithium ions without lithium deposition occurring on the negative electrode sheet, the negative electrode active substance layer region of the negative electrode sheet needs to be set to protrude more compared to the positive electrode active substance layer region of the positive electrode sheet. In FIG. 2, the negative electrode tab (not shown) of the negative electrode sheet 220 is disposed at an upper end of the electrode assembly 200. At the upper end of the electrode assembly 200, the protrusion of the negative electrode active substance layer region of the negative electrode sheet 220 is greater than that of the first insulation film 230, meaning that a top end of the negative electrode active substance layer region of the negative electrode sheet 220 is higher than a top end of the first insulation film 230.

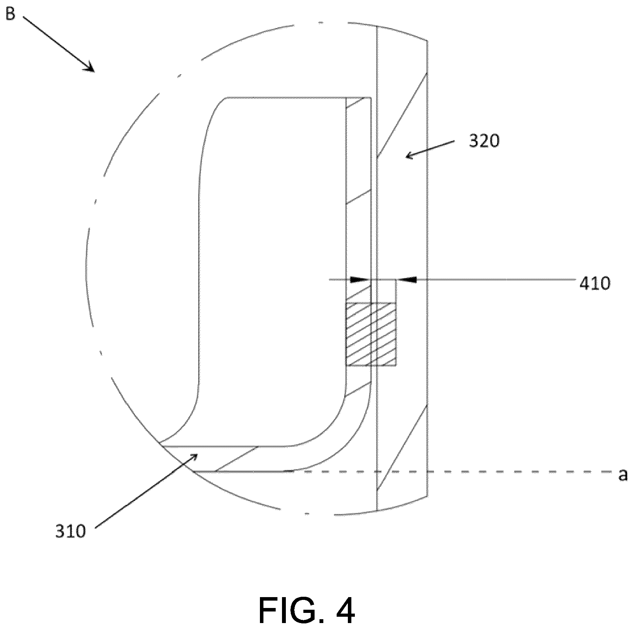

Referring to FIG. 3 below, FIG. 3 is a partial cross-sectional view of the secondary battery 300 according to an embodiment of the present disclosure. As shown in FIG. 3, the electrode assembly 200 is accommodated in the housing 320 of the secondary battery 300. The negative electrode tab 221 of the negative electrode sheet 220 is electrically connected to a first collector plate 310. The first collector plate 310 is disposed on one end of the electrode assembly 200 facing an opening 330. An end wall (not shown) is located below the opening 330, and a direction extending from the end wall toward the opening 330 is a first direction (also called a preset direction), which in FIG. 3 is a direction from bottom to top, and the first collector plate 310 is electrically connected to a sidewall of the housing 320, preferably the first collector plate 310 is welded to the sidewall of the housing 320. It may be understood that the negative electrode tab 221 is bent and connected to the first collector plate 310. A projection of the first collector plate 310 may fall within the electrode assembly 200. Under the circumstances, the negative electrode active substance layer region of the negative electrode sheet 220 is coplanar with a bottom surface of the first collector plate 310. Now referring to FIG. 4, FIG. 4 shows an enlarged view of a region B in FIG. 3. In FIG. 4, the first collector plate 310 is electrically connected to the sidewall of the housing 320. Preferably, the first collector plate 310 is welded to the sidewall of the housing 320 through a weld mark 410 of the housing 320. The first collector plate 310 is welded to the sidewall of the housing 320 through laser penetration welding. The dashed line a indicates the bottom surface of the first collector plate 310, that is, where the negative electrode active substance layer region of the aforementioned negative electrode sheet 220 is coplanar with the first collector plate 310. It may be understood that the first insulation film 230 is wrapped around the electrode assembly 200, that is, the first insulation film 230 is closer to the sidewall of the housing 320 compared to the negative electrode sheet 220. If the first insulation film 230 protrudes more along a direction toward the opening 330 compared to the negative electrode active substance layer region of the negative electrode sheet 220, then when the first collector plate 310 is electrically connected to the sidewall of the housing 320, the first insulation film 230 may insert into a joining position between the first collector plate 310 and the sidewall of the housing 320. Consequently, it is possible to cause connection defects in the produced secondary battery 300. Furthermore, if the first collector plate 310 is welded to the sidewall of the housing 320, then during the welding of the first collector plate 310 to the sidewall of the housing 320, the first insulation film 230 may insert into a welding position between the first collector plate 310 and the sidewall of the housing 320. Consequently, it is possible to cause false welding in the produced secondary battery 300, resulting in welding defects. If it is limited that the first insulation film 230 does not extend beyond the negative electrode active substance layer region of the negative electrode sheet 220 along the first direction, that is, an edge of the first insulation film 230 facing the opening 330 does not extend beyond a top end (indicated by the dashed line a) of the negative electrode active substance layer region of the negative electrode sheet 220, then at least the occurrence of poor connections may be reduced, and furthermore, the occurrence of false welding may be reduced, and the occurrence of welding defects may be decreased.

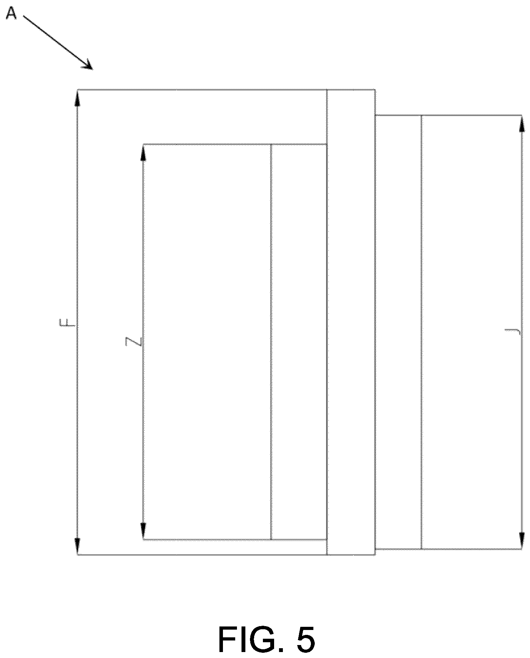

Now referring to FIG. 5, FIG. 5 is a schematic view of the negative electrode active substance layer region of the negative electrode sheet 200, the positive electrode active substance layer region of the positive electrode sheet, and the first insulation film 230 in a region A of FIG. 2. For ease of understanding, the separator 210 is omitted. It may be understood that the electrode assembly 200 is formed by sequentially stacking and winding the positive electrode sheet, the first separator, the negative electrode sheet 220, and the second separator. The first insulation film 230 surrounds the positive electrode active substance layer region of the positive electrode sheet and the negative electrode active substance layer region of the negative electrode sheet 220. The positive electrode sheet has a positive electrode tab extending from the positive electrode active substance layer region, and the positive electrode tab is disposed at one end opposite to the negative electrode tab, that is, at a lower end of the electrode assembly 200 in FIG. 2. Taking a cross-section in the region A from an axial direction of the electrode assembly 200, an outermost layer of the positive electrode sheet, the first separator, the negative electrode sheet 220, and the second separator are taken, while ignoring the first separator and the second separator. The negative electrode sheet 220 is farther from a winding center line Lc compared to the positive electrode sheet, and the first insulation film 230 is at the outermost of the electrode assembly 200, that is, the first insulation film 230 is farther from the winding center line Lc compared to the negative electrode sheet 220. In FIG. 5, the negative electrode active substance layer region of the negative electrode sheet 220 is denoted as F, the positive electrode active substance layer region of the positive electrode sheet is denoted as Z, and a region of the first insulation film 230 is denoted as J. Referring to the aforementioned, it may be understood that the first insulation film 230 does not extend beyond the negative electrode active substance layer region of the negative electrode sheet 220 along the first direction, that is, in FIG. 5, an upper boundary of J does not extend beyond an upper boundary of F. Preferably, in a direction (the first direction) where the negative electrode tab of the negative electrode sheet 220 is located, that is, a direction from bottom to top in FIG. 5, the upper boundary of J does not extend beyond the upper boundary of F while extending beyond an upper boundary of Z. The first insulation film 230 does not extend beyond the negative electrode active substance layer region of the negative electrode sheet 220 along the first direction while extending beyond the positive electrode active substance layer region of the positive electrode sheet. **In** the case of the first direction, the first insulation film 230 is close to the positive electrode active substance layer region of the positive electrode sheet, that is, an upper edge of the first insulation film 230 is close to an upper edge of the positive electrode active substance layer region of the positive electrode sheet, but coplanar with and not extend beyond the upper edge of the positive electrode active substance layer region of the positive electrode sheet. It may be understood that, that is, in the first direction, the upper boundary of J is close to the upper boundary of Z and they are nearly coplanar with each other or coplanar with each other. Then along the first direction, a thickness of an integrity, which is formed by the first insulation film 230, the positive electrode active substance layer region of the positive electrode sheet, and the negative electrode active substance layer region of the negative electrode sheet 220 defined on a plane perpendicular to the first direction, changes from having a common three-layer thickness to having only a single-layer thickness of the negative electrode active substance layer region of the negative electrode sheet 220. This abrupt change in thickness may cause fluid accumulation in the electrode assembly 200, causing corrosion of the electrode assembly 200.

In order to avoid the accumulation of fluid in the electrode assembly 200, which may cause corrosion of the electrode assembly 200, the upper boundary of J is set not to extend beyond the upper boundary of F and to extend beyond the upper boundary of Z, that is, the first insulation film 230 does not extend beyond the negative electrode active substance layer region of the negative electrode sheet 220 along the first direction while extending beyond the positive electrode active substance layer region of the positive electrode sheet. In this way, along the first direction, the thickness of the integrity, which is formed by the first insulation film 230, the positive electrode active substance layer region of the positive electrode sheet, and the negative electrode active substance layer region of the negative electrode sheet 220 defined on the plane perpendicular to the first direction, changes from having a common three-layer thickness to having a two-layer thickness where the negative electrode active substance layer region of the negative electrode sheet 220 and the first insulation film 230 exist, and to having only a single-layer thickness of the negative electrode active substance layer region of the negative electrode sheet 220. This thickness transition variation that may exist at a negative electrode terminal of the secondary battery 200 makes it possible to avoid the accumulation of fluid in the electrode assembly 200 and reduce the corrosion of the electrode assembly 200.

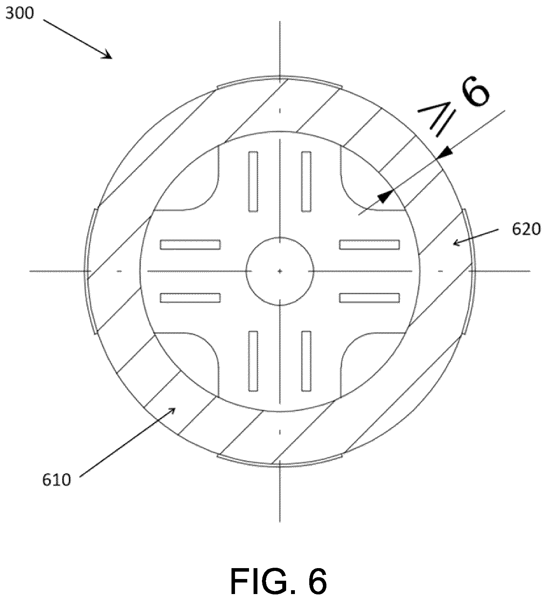

FIG. 6 is a partial schematic view of the secondary battery 300 according to an embodiment of the present disclosure. Referring to FIG. 6, a second collector plate 610 is disposed between an end wall (not shown) and the positive electrode tab (not shown). A second insulation film 620 surrounds an outer peripheral surface of the second collector plate 610. A minimum radius of the second insulation film 620 is R mm larger than a radius of the second collector plate, and the R is greater than or equal to 6. Preferably, a material of the second insulation film 620 may be similar to that of the first insulation film 230. It may be understood that the second collector plate 610 may be electrically connected to the positive electrode tab, and may have a radius smaller than that of the electrode assembly 200. A layer formed by the second insulation film 620 surrounding the second collector plate 610 may be slightly larger than the radius of the electrode assembly 200, and may have an overlap region with the first insulation film 230 wrapped around the outer periphery of the electrode assembly 200. As a preferred embodiment, along a height direction of the secondary battery 300, a height of the overlap region is greater than or equal to 3 millimeters, and less than or equal to 20mm. The height of the overlap region within this range may provide a process window for the electrode assembly 200, preventing the electrode assembly 200 from being completely covered. It may be understood that when the secondary battery 300 is in use, the electrode assembly 200 may expand. If the overlap region of the first insulation film 230 and the second insulation film 620 in the height direction is too large, an expansion space between the electrode assembly 200 and the housing 320 of the secondary battery 300 is compressed, reducing the safety performance of the secondary battery 300. The second insulation film 620 serves to isolate the second collector plate 610 from the end wall and the sidewall of the housing 320. The second collector plate 610 carries positive charge while the housing 320 carries negative charge, and the second insulation film 620 may prevent internal short circuits from occurring inside the secondary battery 300.

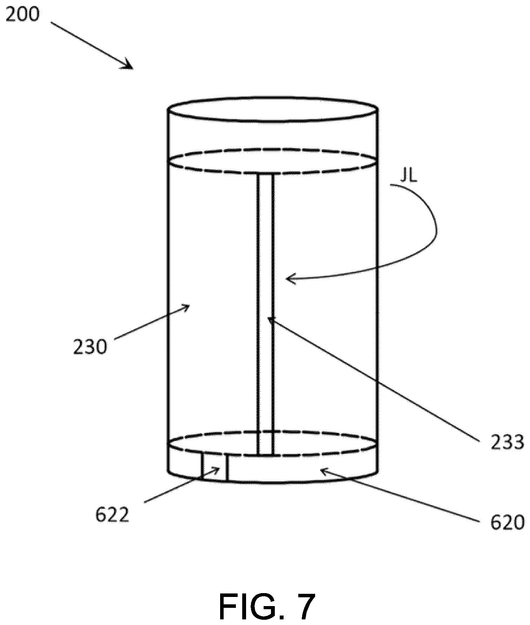

Now referring to FIG. 7, FIG. 7 is a schematic view of the electrode assembly 200 according to an embodiment of the present disclosure. Referring to FIG. 7, the first insulation film 230 has the first overlap region 233, and the second insulation film 620, similar to the first insulation film 230, may also have the second overlap region 622, wherein the first overlap region 233 and the second overlap region 622 do not overlap in the winding direction (JL). Due to the overlap, the first overlap region 233 has a thickness greater than a single layer of the first insulation film 230, and the second overlap region 622 also has a thickness greater than a single layer of the second insulation film 620. Since the first insulation film 230 and the second insulation film 620 have overlap regions, and the first overlap region 233 and the second overlap region 622 do not overlap in the winding direction (JL), it is possible to reduce a diameter of the electrode assembly 200 in a local region, that is, having a reduced maximum columnar diameter, thereby ensuring the energy density of the secondary battery 300, improving the overall roundness of the electrode assembly 200, avoiding the uneven diameter of the electrode assembly 200, and preventing the electrode assembly 200 from contacting and corroding the housing 320 in regions with a high diameter, thus improving a service life of the secondary battery 300. **In** some embodiments, it may be understood that the positive electrode sheet has a finishing position, and the negative electrode sheet 220 also has a finishing position which may be surrounded by the overlap region of the first insulation film 230 and the second insulation film 620. Preferably, the first overlap region 233, the second overlap region 622, the finishing position of the positive electrode sheet, and the finishing position of the negative electrode sheet 220 do not overlap with each other in the winding direction (JL). Such configuration further reduces the diameter of the electrode assembly 200 in the local region, improves the overall roundness of the electrode assembly 200, avoids the uneven diameter of the electrode assembly 200, and improves the service life of the secondary battery 300. In some embodiments, the secondary battery 300 is a columnar battery.

An embodiment of the present disclosure further provides a battery assembly (such as the battery assembly 1002 mentioned above), which may include the secondary battery 300 described in any one of the above embodiments, and the battery assembly may have the advantageous effects described above regarding the secondary battery 300.

An embodiment of the present disclosure further provides an electronic device, which may include the secondary battery 300 described in any one of the above embodiments, and the electronic device may have the advantageous effects described above regarding the secondary battery 300.

## Claims

1. A secondary battery (300), comprising:
a housing (320), having an end wall and a sidewall surrounding the end wall, with an opening (330) formed on one side of the sidewall facing away from the end wall, where a direction extending from the end wall toward the opening (330) is a preset direction;
a positive electrode sheet, a first separator (210), a negative electrode sheet (220) and a second separator (210), which are stacked and wound in sequence to form an electrode assembly (200), the electrode assembly (200) being accommodated in the housing (320), the negative electrode sheet (220) comprising a negative electrode active substance layer region and a negative electrode tab (221) arranged along the preset direction;
a first collector plate (310), disposed on one end of the electrode assembly (200) facing the opening (330), the housing (320) being electrically connected to the negative electrode tab (221) through the first collector plate (310), and
a first insulation film (230), wrapped around and adhered to an outer periphery of the electrode assembly (200),
wherein the secondary battery (300) is **characterized in that**, in the preset direction, an edge of the first insulation film (230) facing the opening (330) does not extend beyond the negative electrode active substance layer region.

2. The secondary battery (300) according to claim 1, wherein the positive electrode sheet comprises a positive electrode active substance layer region and a positive electrode tab disposed in a direction opposite to the preset direction, the positive electrode tab is disposed on one side facing the end wall,
wherein, in the preset direction, the edge of the first insulation film (230) extends beyond the positive electrode active substance layer region.

3. The secondary battery (300) according to claim 1, wherein the first insulation film (230) is wrapped around and attached to the outer periphery of the electrode assembly (200) for at least one turn.

4. The secondary battery (300) according to claim 1, wherein the first insulation film (230) overlaps in a winding direction (JL) of the electrode assembly (200) to form a first overlap region (233), and a length of the first overlap region (233) in the winding direction is greater than 0 and less than or equal to 3 millimeters.

5. The secondary battery (300) according to claim 4, further comprising:
a second collector plate (610), disposed between the end wall and the positive electrode tab; and
a second insulation film (620), surrounding an outer peripheral surface of the second collector plate (610),
wherein a minimum radius of the second insulation film (620) is R mm larger than a radius of the second collector plate (610), and the R is greater than or equal to 6.

6. The secondary battery (300) according to claim 5, wherein in a height direction of the secondary battery (300), the second insulation film (620) overlaps with the first insulation film (230), and a height of an overlap region is greater than or equal to 3mm, and less than or equal to 20mm.

7. The secondary battery (300) according to claim 5, wherein the second insulation film (620) overlaps in the winding direction (JL) to form a second overlap region (622),
wherein the first overlap region (233) and the second overlap region (622) do not overlap in the winding direction (JL).

8. The secondary battery (300) according to claim 5, wherein the second insulation film (620) overlaps in the winding direction (JL) to form a second overlap region (622),
wherein the first overlap region (233), the second overlap region (622), a finishing position of the positive electrode sheet, and a finishing position of the negative electrode sheet (220) do not overlap with each other in the winding direction (JL).

9. The secondary battery (300) according to claim 1, wherein the secondary battery (300) is a columnar battery.

10. The secondary battery (300) according to claim 1, wherein the first collector plate (310) is welded with the sidewall.

11. A battery assembly (1002), comprising the secondary battery (300) according to any one of claims 1-10.

12. An electronic device (1000), comprising the secondary battery (300) according to any one of claims 1-10.
